# EUROPEAN PATENT SPECIFICATION

(11) **EP 1 792 505 B1**
(45) Date of publication and mention of the grant of the patent: **19.11.2008**
(21) Application number: 04769439.3
(22) Date of filing: 21.09.2004
(51) Int. Cl.: H04Q 7/28

(54) **APPARATUS AND METHOD PROVIDING RAPID TALK BURST CONTROL FOR PUSH TO TALK OVER CELLULAR (POC) COMMUNICATIONS**
VORRICHTUNG UND VERFAHREN ZUR BEREITSTELLUNG VON SCHNELLER SPRECHBURSTSTEUERUNG FÜR PUSH TO-TALK-OVER-CELLULAR-KOMMUNIKATION
APPAREIL ET PROCEDE POUR FOURNIR UNE COMMANDE DE RAFALES VOCALES POUR DES COMMUNICATIONS VOCALES INSTANTANEES SUR TELEPHONE CELLULAIRE (POC)

(43) Date of publication of application: 06.06.2007
(73) Proprietor: TELEFONAKTIEBOLAGET LM ERICSSON (publ), 164 83 Stockholm (SE)
(72) Inventor: SUOTULA, Janne, FIN-02120 Espoo (FI); SYNNERGREN, Per, S-977 53 Lulea (SE)
(74) Representative: Sjöberg, Mats Hakan
(86) International application number: PCT/IB2004/003074
(87) International publication number: WO 2006/032939

(56) References cited:
- WO-A-20/04075575
- US-A- 5 983 099
- ERICSSON,MOTOROLA,NOKIA,SIEMENS: "Push to Talk over Cellular (PoC) User Plane; Transport Protocols; PoC Release 1.0;" TECHNICAL SPECIFICATION, 31 October 2003 (2003-10-31), pages 1-37, XP002321969

## Description

### TECHNICAL FIELD OF THE INVENTION

The present invention relates generally to communication networks, and in particular, to an apparatus and method providing rapid Talk Burst Control (TBC) for Push To Talk over Cellular (PoC) communications.

### DESCRIPTION OF RELATED ART

Push To Talk over Cellular (PoC) is a fast-connect, half-duplex service of the type generally known as Push-to-Talk (PTT) or voice chat services. PTT applications provide wireless users with a virtually instantaneous method of connecting to other users, with just the touch of a button on their handset. The service is half-duplex and can be used for one-to-one private calls as well as one-to-many group calls. Users can take advantage of private, direct, simultaneous radio voice connection over very wide areas, affordably and conveniently, often replacing other devices such as pagers and two-way radios. Users receiving the call hear the caller's voice automatically without having to answer the call.

PoC is the official name used in the open specifications currently being developed by the Open Mobile Alliance (OMA) for this service. The PoC specifications utilize a number of existing specifications from the Internet Engineering Task Force (IETF), the Third Generation Partnership Project (3GPP), and 3GPP2 including the capabilities of the 3GPP IP Multimedia Subsystem (IMS) and the 3GPP2 Multimedia Domain (MMD) to enable IP connectivity between mobile devices. In one solution, PoC uses a server, which is independent of the existing radio and core networks. PoC may be implemented on the IP backbone over radio technologies such as WCDMA, CDMA2000, GPRS, UMTS, and 802.11.

The use of IMS and MMD adds the ability to integrate voice and data services over IP-based packet-switched networks. Two fundamental capabilities are added on top of the packet-switched domain. First is the ability to find a user via the Session Initiation Protocol (SIP) to initiate a session. Second is the ability to integrate new services such as PTT. By introducing IMS and its multiple service-delivery capability, a common infrastructure for services is established, and the requirement to build a service delivery infrastructure for each service is eliminated.

The voice stream in PoC is controlled by a Talk Burst Control (TBC) mechanism. When a PoC User wants to talk, the User presses the Push-To-Talk (PTT) button on his/her PoC Client handset, and a TBC protocol message exchange occurs between the PoC Client and a PoC Server implemented in the IMS/MMD network. The TBC protocol exchange either grants or denies the PoC User's request to talk. This TBC protocol exchange must be fast in order to guarantee a good user experience and make PoC a true "instant" talk application.

In ERICSSON, MOTOROLA, NOKIA, SIEMENS: "Push to Talk over Cellular (PoC) User Plane; Transport Protocols; PoC Release 1.0; "TECHNICAL SPECIFICATION, 31 October 2003 (2003-10-31), pages 1-37, XP002321969 is disclosed a method of providing Talk Burst Control, TBC, for a Push to Talk over Cellular, PoC, Client engaged in a PoC communication. A PoC Client A is engaged in a PoC communication with a PoC Client B and the method comprises detecting the completion of a talk burst by PoC Client A.

In the patent US-A-5,983,099 is disclosed the providing of an accelerated response to a push to talk origination message in a dispatch system. A set of resources in a base station and in a controller are preallocated to create a communication connection from the base station to the equipment creating the forward link broadcast signal. When a remote unit presses the push to talk button, the base station immediately responds with a page message corresponding to the preallocated path.

In the patent application WO 2004/075575 A2 is disclosed the establishing of an invite-first communication session in a wireless communication network. An invite message is received from an inviter and the invite message is forwarded to at least one invitee. A response is received from the invitee in response to the invite message and a communication session is established between the inviter and the invitee.

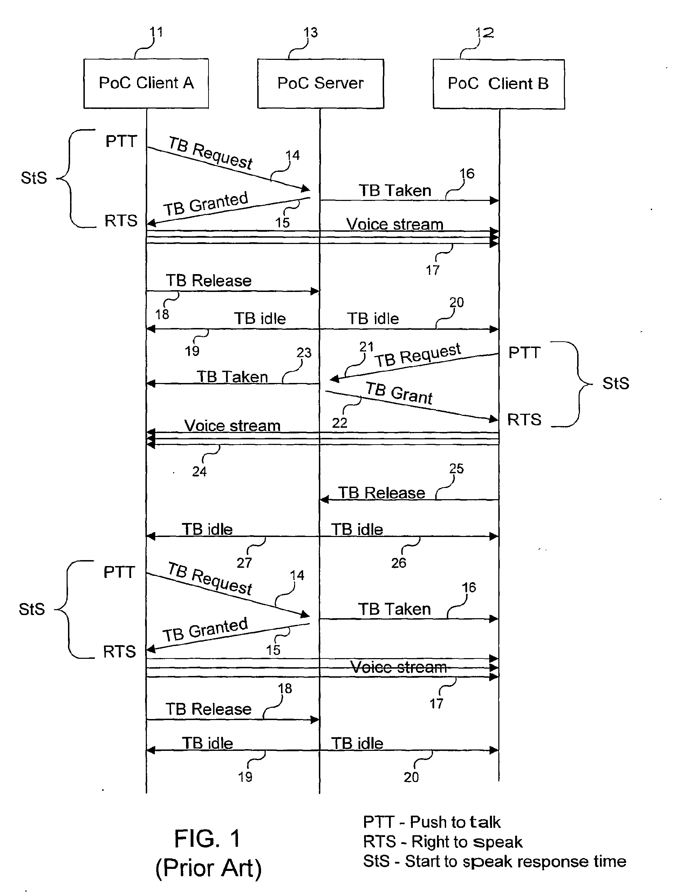

FIG. 1 is a signaling diagram illustrating the flow of signaling messages when utilizing the existing TBC protocol. A PoC Client A 11 is talking to a PoC Client B 12 under the control of a PoC Server 13. Each PoC Client must request permission to talk from the PoC server. FIG. 1 illustrates the usual condition for a person-to-person call in which the two PoC Clients alternate talking. The notation PTT indicates the point in time that one of the PoC Clients pushes the PTT button on the Client's handset, and the notation RTS indicates the point in time that the Client receives the right to speak. The notation StS thus indicates the delay time experienced by the User from the time the PTT button is pressed until the right to speak is received.

Initially, PoC Client A 11 presses the PTT button on his handset, and a TB Request message 14 is sent to the PoC Server 13 requesting permission to talk. The PoC Server returns a TB Granted message 15 to PoC Client A. The PoC Server also sends a TB Taken message 16 to PoC Client B 12 notifying PoC Client B that PoC Client A has been granted the right to speak. Thereafter, the radio bearer between the Clients is activated, and the voice stream 17 is carried from PoC Client A to PoC Client B as long as PoC Client A holds down the PTT Client B is a prioritized user. In this embodiment, the method may pre-grant PoC Client B permission to talk after each talk burst, regardless of who transmitted the previous talk burst.

In another aspect, the present invention is directed to an apparatus for providing rapid Talk Burst Control for a PoC Client engaged in a PoC communication, wherein PoC Client A is engaged in a PoC communication with PoC Client B. The apparatus includes means for detecting the completion of a talk burst by PoC Client A; and means for pre-granting PoC Client B permission to talk prior to receiving a request to talk from PoC Client B. The apparatus may also include a communication pattern model that predicts that PoC Client B is the predicted next talker. The apparatus may be implemented in a PoC Server.

In yet another aspect, the present invention is directed to a PoC Client handset enabling a user to communicate with at least one other user through a PoC Server. The PoC Client handset includes a push-to-talk (PTT) button for signaling to the PoC Server, when the PTT button is pressed, that a user requests permission to talk, and for signaling to the PoC Server, when the PTT button is released, that the user has finished talking. The PoC Client handset also includes means for receiving from the PoC server, an indication that the user has been pre-granted permission to talk prior to the user pressing the PTT button. In further embodiments, the handset may also include means responsive to the indication that the user has been pre-granted permission to talk, for indicating to the user that the user has been pre-granted permission to talk, and for indicating to the user that the user has the right to talk immediately after the user presses the PTT button.

### BRIEF DESCRIPTION OF THE DRAWINGS

FIG. 1 (Prior Art) is a signaling diagram illustrating the flow of signaling messages when utilizing the existing TBC protocol;
FIG. 2 is a signaling diagram illustrating the flow of signaling messages in a first exemplary embodiment of the present invention;
FIG. 3 is a signaling diagram illustrating the flow of signaling messages in a second exemplary embodiment of the present invention;
FIG. 4 is a signaling diagram illustrating the flow of signaling messages in a third exemplary embodiment of the present invention;
FIG. 5 is a signaling diagram illustrating the flow of signaling messages in a fourth exemplary embodiment of the present invention; and
FIG. 6 is a simplified block diagram of a PoC Server modified in accordance with the apparatus of the present invention.

### DETAILED DESCRIPTION OF EMBODIMENTS

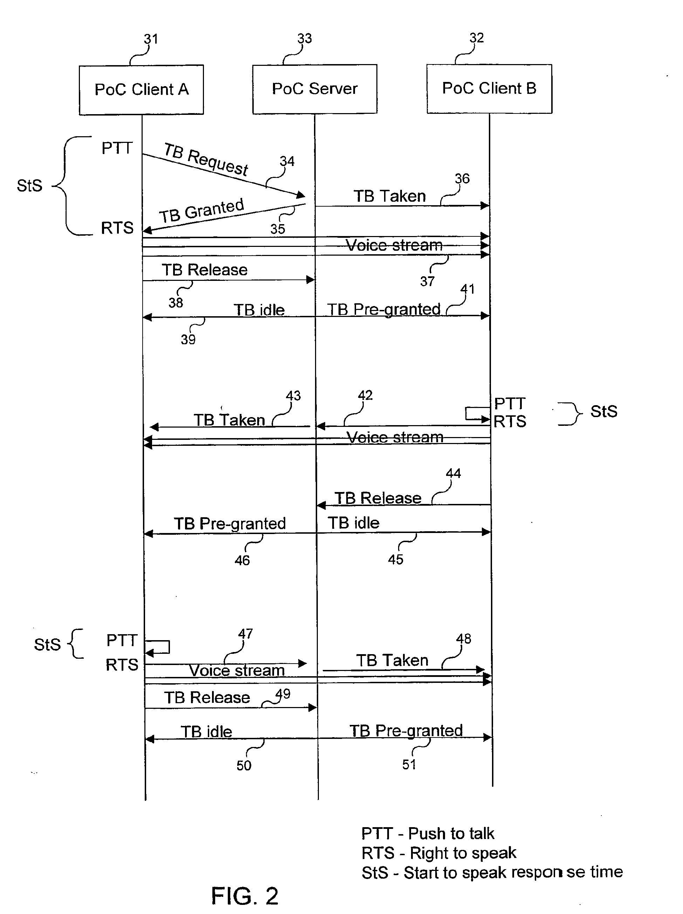

FIG. 2 is a signaling diagram illustrating the flow of signaling messages in a first exemplary embodiment of the present invention. PoC Client A 31 and PoC Client B 32 are engaged in a person-to-person call under the control of a PoC Server 33. Person-to-person calls usually follow a communication pattern in which a first PoC User talks and then the other PoC user responds. Thus, each PoC Client transmits every second talk burst. In the example shown in FIG. 2, the users alternate their speech, with PoC Client A talking first, PoC Client B talking next, and then PoC Client A talking again, and so on. This embodiment takes this alternative speech pattern into account by accessing a communication pattern model or algorithm in the TBC mechanism in order to provide faster response time to the next talker.

To improve the latency time for the predicted next talker, the invention provides the predicted next talker with a pre-granted permission to talk. The pre-granted permission to talk may be signaled from the PoC Server to the PoC Client using a new TBC protocol message during the idle-state when no voice is exchanged in the PoC session, but the PoC session is ongoing. Thus, the PoC Client receiving media is always pre-granted permission to talk after the previous talk burst has ended (i.e., after the TB Release message is received in the PoC Server). The PoC Client handset may then indicate to the user that he has been given pre-granted permission to talk. When the PoC Client having the pre-granted permission to talk presses the PTT button, he is immediately given permission to talk without any additional signaling to the PoC Server. Thus the StS delay time is greatly reduced.

When the PoC Server receives media from the PoC Client having pre-granted permission to talk, the PoC Server sends a TB Taken message to the other PoC Client indicating that the pre-granted PoC Client now has permission to talk, and forwards the media to the other PoC Client.

The example illustrated in FIG. 2 shows that an initial talk request from PoC Client A 31 may follow steps 34-38, which are essentially the same as steps 14-18 of FIG. 1. Following the TB Release message 18, however, instead of sending a TB Idle indication to each PoC Client, the PoC Server 33 sends a TB Idle indication 39 to PoC Client A 31 and a TB Pre-granted message 41 to PoC Client B 32. PoC Client B now has pre-granted permission to talk. Thereafter, when PoC Client B presses the PTT button, User B immediately receives an RTS indication and can immediately begin talking. When the voice stream 42 is received by the PoC Server, the PoC Server sends a TB Taken message 43 to PoC Client A indicating that PoC Client B now has permission to talk, and forwards the media to PoC Client A.

When PoC Client B 32 is finished talking and releases the PTT button, a TB Release message 44 is sent to the PoC Server 33. Based on the predicted alternating speech pattern, the PoC Server 33 sends a TB Idle indication 45 back to PoC Client B, and sends a TB Pre-granted message 46 to PoC Client A. PoC Client A now has pre-granted permission to talk. Thereafter, when PoC Client A presses the PTT button, User A immediately receives an RTS indication and can immediately begin talking. When the voice stream 47 is received by the PoC Server, the PoC Server sends a TB Taken message 48 to PoC Client B indicating that PoC Client A now has permission to talk, and forwards the media to PoC Client B.

When PoC Client A 31 is finished talking and releases the PTT button, a TB Release message 49 is sent to the PoC Server 33. Based on the predicted alternating speech pattern, the PoC Server 33 sends a TB Idle indication 50 back to PoC Client A, and sends a TB Pre-granted message 51 to PoC Client B. Thus the method continues to alternate providing pre-granted permission to talk to each of the PoC Clients.

It should be noted that in this scenario the voice stream itself has to trigger the radio access network to go from the dormant state to the active state (if needed). This delay will influence the turnaround time (TaT), which is defined as the time period between the point in time when a PoC User releases the PTT button and when the PoC User can hear the other PoC User begin to speak. However, a longer TaT is typically less annoying than a longer StS.

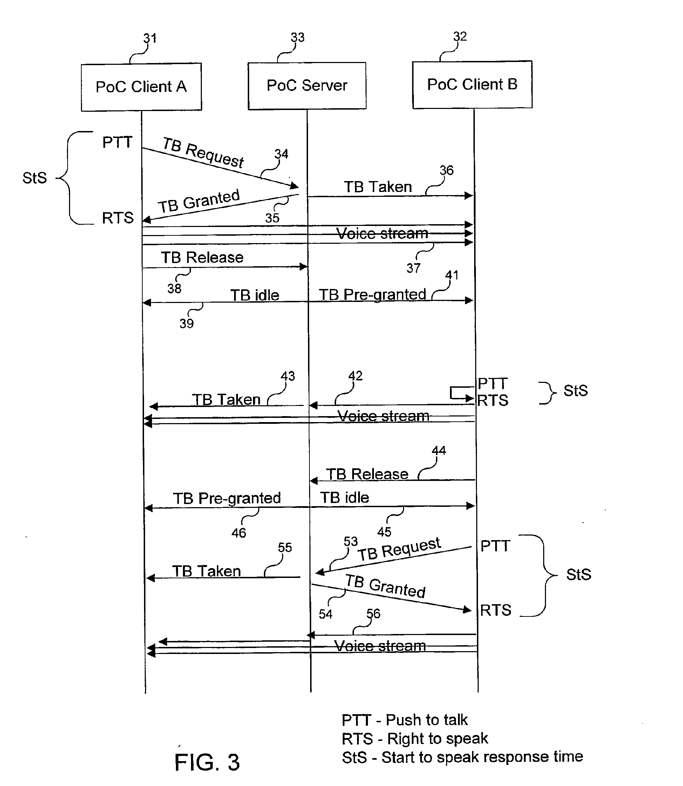

FIG. 3 is a signaling diagram illustrating the flow of signaling messages in a second exemplary embodiment of the present invention. In this embodiment, a PoC User engaged in a person-to-person call transmits two talk bursts in a row rather than alternating with the other PoC User. The example illustrated in FIG. 3 shows that an initial talk request from PoC Client A 31 may follow steps 34-37. Upon the transmission of the TB Release message 38, the PoC Server 33 sends a TB Idle indication 39 to PoC Client A and a TB Pre-granted message 41 to PoC Client B. Thereafter, when PoC Client B presses the PTT button, User B immediately receives an RTS indication and can immediately begin talking. When the voice stream 42 is received by the PoC Server, the PoC Server sends a TB Taken message 43 to PoC Client A indicating that PoC Client B now has permission to talk, and forwards the media to PoC Client A.

When PoC Client B 32 is finished talking and releases the PTT button, a TB Release message 44 is sent to the PoC Server 33. Based on the predicted alternating speech pattern, the PoC Server 33 sends a TB Idle indication 45 back to PoC Client B, and sends a TB Pre-granted message 46 to PoC Client A. PoC Client A now has pre-granted permission to talk. Thereafter, PoC Client B unexpectedly presses the PTT button and sends a TB Request message 53 to the PoC Server. In this embodiment, the PoC Server immediately sends a TB Granted message 54 to PoC Client B, granting permission to talk. The PoC Server also sends a TB Taken message 55 to PoC Client A, essentially rescinding the pre-granted permission to talk and informing PoC Client A that another PoC Client now has permission to talk. When the PoC Server receives the voice stream 56 from PoC Client B, the PoC Server forwards the voice stream to PoC Client A.

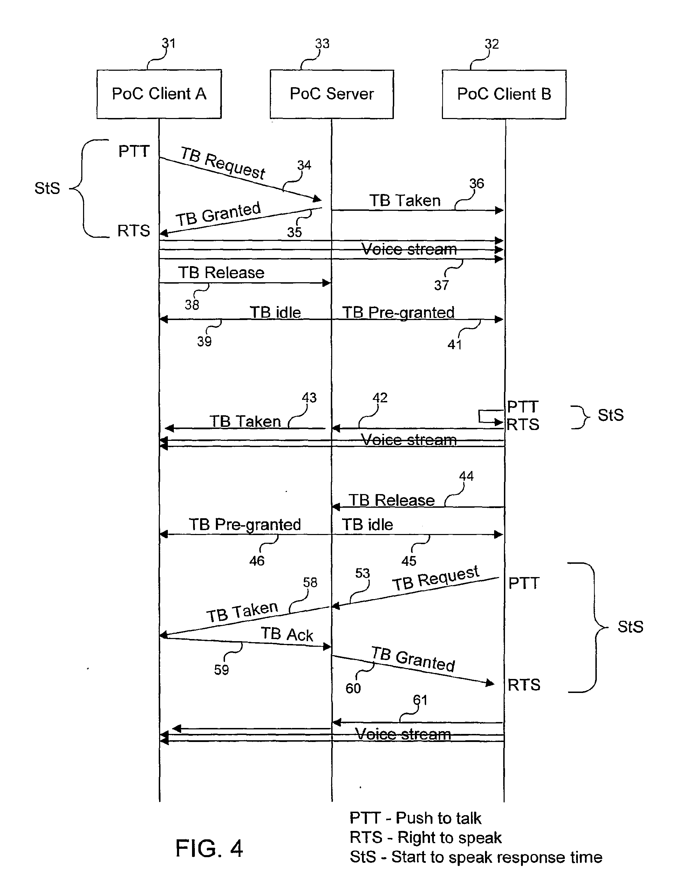

FIG. 4 is a signaling diagram illustrating the flow of signaling messages in a third exemplary embodiment of the present invention. In this embodiment, like FIG. 3, a PoC User engaged in a person-to-person call transmits two talk bursts in a row rather than alternating with the other PoC User. The steps of this embodiment are the same as FIG. 3 from step 34 through step 53 when PoC Client B unexpectedly presses the PTT button and sends a TB Request message 53 to the PoC Server. In this embodiment, the PoC Server first sends a TB Taken message 58 to PoC Client A, essentially revoking the pre-granted permission to talk and informing PoC Client A that another PoC Client now has permission to talk. The PoC Server then waits for PoC Client A to return a TB Acknowledgment message 59 before sending a TB Granted message 60 to PoC Client B, granting permission to talk. When the PoC Server receives the voice stream 61 from PoC Client B, the PoC Server forwards the voice stream to PoC Client A.

In another embodiment, the users may be engaged in a group communication. One of the users may be a prioritized PoC User, who may be a dispatcher or the group owner. The object of this embodiment is to optimize the StS delay of the prioritized PoC User. The solution provided by this embodiment is that the prioritized PoC User is always given pre-granted permission to talk upon the completion of a talk burst, regardless of whom was sending the completed talk burst.

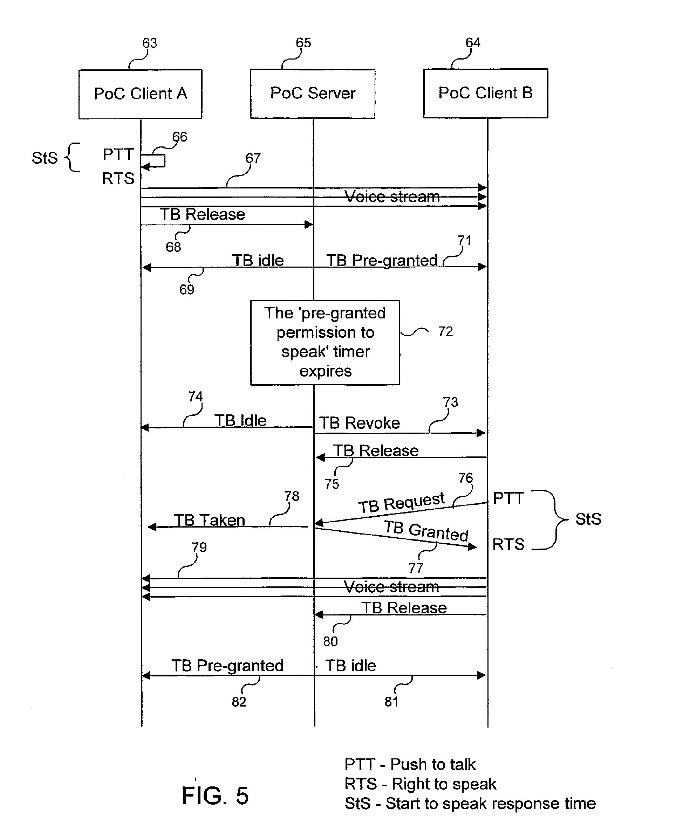

FIG. 5 is a signaling diagram illustrating the flow of signaling messages in a fourth exemplary embodiment of the present invention. In this embodiment, PoC Client A 63 and PoC Client B 64 are engaged in a person-to-person call under the control of a PoC Server 65. The example begins at step 66, where PoC Client A experiences a very short StS delay because he has been pre-granted permission to talk in previous steps not shown in FIG. 5, but shown for example, in FIGS. 2-4. The voice stream 67 is then transmitted to PoC Client B 64 until PoC Client A finishes talking and sends a TB Release message 68 to the PoC Server 33. The PoC Server then follows the person-to-person speech pattern model, which assumes that the PoC Clients will alternate speaking. Thus, a TB Idle message 69 is sent to PoC Client A, and a TB Pre-granted message 71 is sent to PoC Client B. Simultaneously, the PoC Server starts a Pre-granted Permission Timer, which expires at 72. The timer measures a maximum duration of the pre-granted permission to speak. The typical person-to-person speech pattern model first expects a reply on each talk burst, but if no reply is given after a certain time interval, there is equal probability that the next talk burst will come from PoC Client A or PoC Client B. Therefore, upon expiry of the timer, the PoC Server sends a TB Revoke message 73 to PoC Client B revoking the pre-granted permission to speak.

The PoC Server also sends another TB Idle message 74 to PoC Client A because PoC Client B must acknowledge the TB Revoke message before the PoC server can conclude that the pre-granted permission to speak is removed. In the illustrated embodiment, PoC Client B acknowledges the TB Revoke message with a TB Release message 75.

As illustrated, after the expiry of the timer and the revocation of the pre-granted permission to speak, PoC Client B 64 sends a TB Request message 76 requesting permission to speak. The PoC Server 33 returns a TB Granted message 77 to PoC Client B. The PoC Server also sends a TB Taken message 78 to PoC Client A 63 notifying PoC Client A that PoC Client B has been granted the right to speak. Thereafter, the radio bearer between the Clients is activated, and the voice stream 79 is carried from PoC Client B to PoC Client A. When PoC Client B releases the PTT button, a TB Release message 80 is sent to the PoC Server. The PoC Server then sends a TB Idle message 81 to PoC Client B, and sends a TB Pre-granted message 82 to PoC Client A.

In one embodiment, a TB Pre-granted indication is included in the TB Idle message. The PoC Server "pumps" TB Idle messages to all PoC Clients during the idle period so the TB Revoke message 73 sent to remove the pre-granted permission may be sent instead of a TB Idle message and thus not create extra traffic.

It should be noted that the reply (here the TB Release message 75) creates one extra message in the uplink. However, if TBC protocol messages are sent reliable (for example using TCP), the TB Release message may be removed.

It should also be noted that the Pre-granted Permission Timer may be utilized for both person-to-person calls as well as group communications and prioritized users. The timer may be utilized to revoke the pre-granted permission to talk whenever the user with the pre-granted permission waits too long to begin talking.

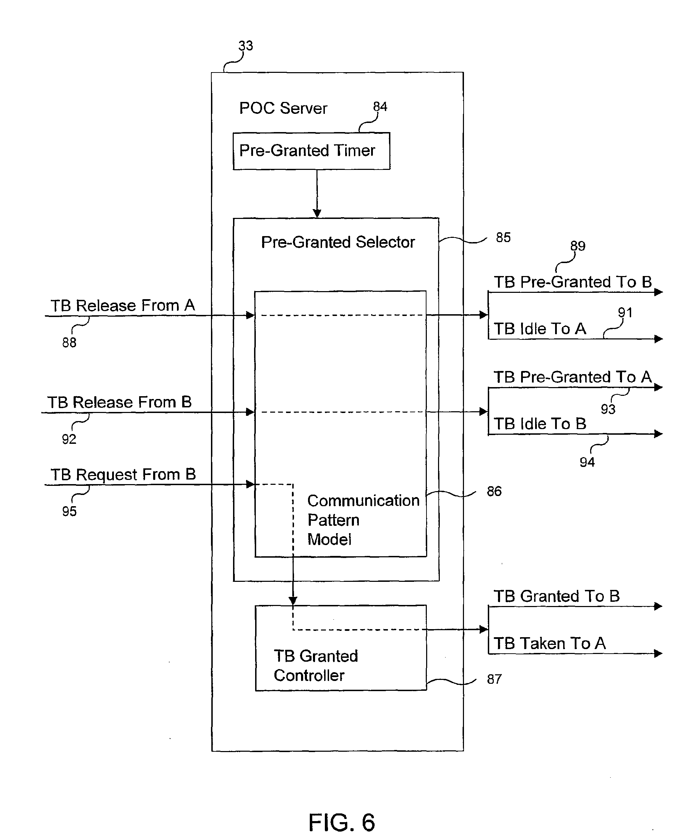

FIG. 6 is a simplified block diagram of a PoC Server 33 modified in accordance with the apparatus of the present invention. In addition to the normal means for communicating with Clients and forwarding media, the PoC Server includes a Pre-granted Permission Timer 84, a Pre-granted Selector 85 containing a Communication Pattern Model 86, and a TB Granted Controller 87.

When PoC Client A finishes talking, a TB Release Message 88 is sent to the PoC Server. The message is routed to the Pre-granted Selector 85, which uses the Communication Pattern Model 86 to issue a TB Pre-granted message 89 to PoC Client B and a TB Idle message 91 to PoC Client A. When PoC Client B finishes talking, a TB Release Message 92 is sent to the PoC Server. The message is routed to the Pre-granted Selector, which uses the Communication Pattern Model to issue a TB Pre-granted message 93 to PoC Client A and a TB Idle message 94 to PoC Client B. If PoC Client B then requests to speak out of turn, the PoC Server receives a TB Request message 95 from PoC Client B. This message is routed to the TB Granted Controller 87. The TB Granted Controller issues a TB Granted message 96 to PoC Client B and revokes the pre-granted permission given to PoC Client A by sending a TB Taken message to PoC Client A, as shown in the embodiments of FIGS. 3 and 4.

Those skilled in the art will readily appreciate that the present invention may be implemented using either hardware, or software, or both, and further, software implementations may vary using different languages and data structures. The present invention is not limited to a specific language and/or class of languages, nor is it limited to any single data structure implantation.

The present invention may of course, be carried out in other specific ways than those herein set forth. The present embodiments are, therefore, to be considered in all respects as illustrative and not restrictive and all changes coming within the meaning and equivalency range of the appended claims are intended to be embraced therein.

## Claims

1. A method of providing rapid Talk Burst Control, TBC, for a Push To Talk over Cellular, PoC, Client engaged in a PoC communication, wherein a PoC Client A (31) is engaged in a PoC communication with a PoC Client B (32) via a PoC server (33), said method comprising the steps of:
detecting (38) in the PoC server the completion of a talk burst by the PoC Client A,
**characterized by**:
pre-granting by the PoC server (33) the PoC Client B a permission (41) to talk prior to receiving a request to talk from the PoC Client B, without having to send any additional signaling to the PoC server, giving the PoC client B (32) the right to talk immediately after pressing its Push-To-Talk button.

2. The method of claim 1, wherein the step of pre-granting PoC Client B (32) permission to talk includes sending a TBC protocol message to PoC Client B pre-granting PoC Client B the right to transmit media without PoC Client B having to send any additional signaling to a PoC Server (33).

3. The method of claim 1, further comprising, after detecting the completion of the talk burst by PoC Client A (31), the step of utilizing a communication pattern model to predict that PoC Client B (32) is the predicted next talker.

4. The method of claim 3, wherein PoC Client A (31), and PoC Client B (32) are engaged in a person-to-person communication, and the communication pattern model predicts that talk bursts (37) will alternate between PoC Client A and PoC Client B after each talk burst.

5. The method of claim 1, wherein PoC Client A (31), and PoC Client B (32) are engaged in a group communication and PoC Client B owns the group, and the method includes pre-granting PoC Client B permission to talk after each talk burst, regardless of who transmitted the previous talk burst.

6. The method of claim 1, wherein PoC Client A (31), and PoC Client B (32) are engaged in a group communication and PoC Client B is a prioritized user, and the method includes pre-granting (53,54) PoC Client B permission to talk after each talk burst, regardless of who transmitted the previous talk burst.

7. The method of claim 1, further comprising the steps of:
starting a timer when PoC Client B (64) is pre-granted permission to talk; and
revoking (73) the permission to talk if PoC Client B does not initiate a talk burst before the timer expires (72).

8. The method of claim 1, further comprising, after pre-granting PoC Client B (32) permission to talk, the steps of:
receiving a request to talk from PoC Client A (31);
immediately granting PoC Client A permission (54) to talk; and
notifying (55) PoC Client B that permission to talk has been revoked after granting PoC Client A permission to talk.

9. The method of claim 1, further comprising, after pre-granting PoC Client B (32) permission to talk, the steps of:
receiving a request to talk from PoC Client A (31);
immediately notifying (58) PoC Client B that permission to talk has been revoked;
receiving an acknowledgment (59) from PoC Client B; and
granting (60) PoC Client A permission to talk after receiving the acknowledgment from PoC Client B.

10. The method of claim 1, further comprising PoC Client B (32) indicating to a user that the user has been pre-granted permission to talk.

11. The method of claim 1, further comprising PoC Client B (32) indicating to a user that the user has the right to talk immediately after the user presses a push-to-talk, PTT, button.

12. An apparatus for providing rapid Talk Burst Control, TBC, for a Push To Talk over Cellular, PoC, Client engaged in a PoC communication, wherein a PoC Client A (31) is engaged in a PoC communication with a PoC Client B (32), said apparatus comprising:
means (85) for detecting the completion of a talk burst (37) by the PoC Client A;
**characterized by**:
means (85) for pre-granting the PoC Client B a permission to talk prior to receiving a request to talk from the PoC Client B without having to send any additional signaling to the PoC server, giving the PoC client B (32) the right to talk immediately after pressing its Push-To-Talk button.

13. The apparatus of claim 12, wherein the means for pre-granting PoC Client B (32) permission to talk includes means (86) for sending a TBC protocol message (89) to PoC Client B pre-granting PoC Client B the right to transmit media without PoC Client B having to send any additional signaling to a PoC Server.

14. The apparatus of claim 12, wherein the means (85) for pre-granting PoC Client B (32) permission to talk includes a communication pattern model (86) that predicts that PoC Client B is the predicted next talker.

15. The apparatus of claim 14, wherein PoC Client A (31) and PoC Client B (32) are engaged in a person-to-person communication, and the communication pattern model predicts that talk bursts (37) will alternate between PoC Client A and PoC Client B after each talk burst.

16. The apparatus of claim 12, wherein PoC Client A (31) and PoC Client B (32) are engaged in a group communication and PoC Client B owns the group, wherein the means (85) for pre-granting PoC Client B permission to talk includes means for pre-granting PoC Client B permission to talk after each talk burst, regardless of who transmitted the talk burst.

17. The apparatus of claim 12, wherein PoC Client A (31) and PoC Client B (32) are engaged in a group communication and PoC Client B is a prioritized user, wherein the means (85) for pre-granting PoC Client B permission to talk includes pre-granting PoC Client B permission to talk after each talk burst, regardless of who sent transmitted the talk burst.

18. The apparatus of claim 12, further comprising:
a timer (84) for measuring an allowed time period after PoC Client B (32) is pre-granted permission to talk; and
means for revoking the permission to talk if PoC Client B does not initiate a talk burst before the timer expires.

19. The apparatus of claim 12, further comprising:
means for receiving a request to talk from PoC Client A (31) after pre-granting PoC Client B (32) permission to talk;
means (87) for immediately granting PoC Client A permission to talk; and
means for notifying PoC Client B that permission to talk has been revoked after granting PoC Client A permission to talk.

20. The apparatus of claim 12, further comprising:
means (86) for receiving a request to talk from PoC Client A (31) after pre-granting PoC Client B (31) permission to talk;
means (86) for immediately notifying PoC Client B that permission to talk has been revoked;
means for receiving an acknowledgment from PoC Client B; and
means (87) for granting PoC Client A permission to talk after receiving the acknowledgment from PoC Client B.

21. The apparatus of claim 12, wherein the apparatus is implemented in a PoC Server (33) that controls the communication.

## Patentansprüche

1. Verfahren eines Bereitstellens einer schnellen Gesprächs-Burst-Steuerung (TBC - Talk Burst Control) für einen Push-to-Talk-over-Cellular-Client (PoC-Client), der an einer PoC-Kommunikation beteiligt ist, wobei ein PoC-Client A (31) an einer PoC-Kommunikation mit einem PoC-Client B (32) über einen PoC-Server (33) beteiligt ist, wobei das Verfahren die Schritte umfasst:
Detektieren (38) in dem PoC-Server der Beendigung eines Gesprächsbursts durch den PoC-Client A,
**gekennzeichnet durch**
Voraberteilen **durch** den PoC-Server (33) einer Erlaubnis (41) für den PoC-Client B, vor einem Empfangen einer Sprechanfrage von dem PoC-Client B zu sprechen, ohne irgendein zusätzliches Signal an den PoC-Server senden zu müssen, das dem PoC-Client B (32) das Recht gibt, direkt nach einem Drücken des Push-to-Talk-Knopfes zu sprechen.

2. Verfahren nach Anspruch 1, wobei der Schritt eines Voraberteilens einer Sprecherlaubnis für den PoC-Client B (32) ein Senden einer TBC-Protokollnachricht an den PoC-Client B umfasst, die dem PoC-Client B das Recht voraberteilt, Medien zu senden, ohne dass der PoC-Client B ein zusätzliches Signal an einen PoC-Server (33) senden muss.

3. Verfahren nach Anspruch 1, weiter mit, nach einem Detektieren der Beendigung des Gesprächsbursts durch den PoC-Client A (31), dem Schritt einer Verwendens eines Kommunikationsmustermodels, um vorherzusagen, dass der PoC-Client B (32) der vorhergesagte nächste Sprecher ist.

4. Verfahren nach Anspruch 3, wobei ein PoC-Client A (31) und PoC-Client B (32) an einer Person-zu-Person-Kommunikation beteiligt sind und das Kommunikationsmustermodel vorhersagt, dass sich Gesprächsbursts (37) zwischen PoC-Client A und PoC-Client B nach jedem Gesprächsburst abwechseln.

5. Verfahren nach Anspruch 1, wobei ein PoC-Client A (31) und ein PoC-Client B (32) an einer Gruppenkommunikation beteiligt sind und ein PoC-Client B die Gruppe besitzt und das Verfahren ein Voraberteilen einer Sprecherlaubnis für den PoC-Client B nach jedem Gesprächsburst einschließt, ungeachtet dessen wer den vorherigen Gesprächsburst übertragen hat.

6. Verfahren nach Anspruch 1, wobei ein PoC-Client A (31) und ein PoC-Client B (32) an einer Gruppenkommunikation beteiligt sind und ein PoC-Client B ein priorisierter Benutzer ist und das Verfahren ein Voraberteilen (53, 54) einer Sprecherlaubnis für den PoC-Client B nach jedem Gesprächsburst einschließt, ungeachtet dessen wer den vorherigen Gesprächsburst übertragen hat.

7. Verfahren nach Anspruch 1, weiter mit den Schritten:
Starten eines Zeitgebers, wenn dem PoC-Client (64) eine Gesprächserlaubnis voraberteilt wird; und
Widerrufen (73) der Gesprächserlaubnis, falls der PoC-Client B keinen Gesprächsburst initiiert, bevor der Zeitgeber (72) abläuft.

8. Verfahren nach Anspruch 1, weiter, nach einem Voraberteilen einer Gesprächserlaubnis für den PoC-Client B (32), mit den Schritten:
Empfangen einer Sprechanfrage von einem PoC-Client A (31);
sofortiges Erteilen einer Sprecherlaubnis (54) für PoC-Client A; und
Benachrichtigen (55) des PoC-Clients B, dass eine Sprecherlaubnis widerrufen worden ist, nach einem Erteilen einer Sprecherlaubnis für den PoC-Client A.

9. Verfahren nach Anspruch 1, weiter, nach einem Voraberteilen einer Gesprächserlaubnis für den PoC-Client B (32), mit den Schritten:
Empfangen einer Sprechanfrage von einem PoC-Client A (31);
sofortiges Erteilen einer Sprecherlaubnis (54) für PoC-Client A; und
Empfangen einer Bestätigung (59) von einem PoC-Client B; und
Erteilen (60) einer Sprecherlaubnis für den PoC-Client A, nach einem Empfangen der Bestätigung vom PoC-Client B.

10. Verfahren nach Anspruch 1, weiter mit einem PoC-Client B (32), der einem Benutzer anzeigt, dass dem Benutzer eine Sprecherlaubnis voraberteilt worden ist.

11. Verfahren nach Anspruch 1, weiter mit einem PoC-Client B (32), der einem Benutzer anzeigt, dass der Benutzer die Sprecherlaubnis besitzt, direkt nachdem der Benutzer einen Push-to-Talk-Knopf PTT drückt.

12. Gerät zum Bereitstellen einer schnellen Gesprächs-Burst-Steuerung (TBC - Talk Burst Control) für einen Push-to-Talk-over-Cellular-Client (PoC-Client), der an einer PoC-Kommunikation beteiligt ist, wobei ein PoC-Client A (31) an einer PoC-Kommunikation mit einem PoC-Client B (32) beteiligt ist, wobei das Gerät umfasst:
eine Vorrichtung (85) zum Detektieren der Beendigung eines Gesprächsbursts (37) durch den PoC-Client A,
**gekennzeichnet durch**
eine Vorrichtung (85) zum Voraberteilen einer Sprecherlaubnis (41) für den PoC-Client B vor einem Empfangen einer Sprechanfrage von dem PoC-Client B, ohne irgendein zusätzliches Signal an den PoC-Server senden zu müssen, das dem PoC-Client B (32) das Recht gibt, direkt nach dem Drücken des Push-to-Talk-Knopfes zu sprechen.

13. Gerät nach Anspruch 12, wobei die Vorrichtung zum Voraberteilen einer Sprecherlaubnis für den PoC-Client B (32) eine Vorrichtung (86) zum Senden einer TBC-Protokollnachricht (89) an den PoC-Client einschließt, die dem PoC-Client B das Recht voraberteilt, Medien zu senden, ohne dass der PoC-Client B zusätzliche Signale an einen PoC-Server (33) senden muss.

14. Gerät nach Anspruch 12, wobei die Vorrichtung (85) zum Voraberteilen einer Sprecherlaubnis für den PoC-Client B (32) ein Kommunikationsmustermodel (86) einschließt, das vorhersagt, dass der PoC-Client B (32) der vorhergesagte nächste Sprecher ist.

15. Gerät nach Anspruch 14, wobei ein PoC-Client A (31) und PoC-Client B (32) an einer Person-zu-Person-Kommunikation beteiligt sind und das Kommunikationsmustermodel vorhersagt, dass sich Gesprächsbursts (37) zwischen PoC-Client A und PoC-Client B nach jedem Gesprächsburst abwechseln.

16. Gerät nach Anspruch 12, wobei ein PoC-Client A (31) und ein PoC-Client B (32) an einer Gruppenkommunikation beteiligt sind und ein PoC-Client B die Gruppe besitzt, wobei die Vorrichtung (85) zum Voraberteilen einer Sprecherlaubnis für den PoC-Client B eine Vorrichtung zum Voraberteilen einer Sprecherlaubnis für den PoC-Client B nach jedem Gesprächsburst einschließt, ungeachtet dessen wer den vorherigen Gesprächsburst übertragen hat.

17. Gerät nach Anspruch 12, wobei ein PoC-Client A (31) und ein PoC-Client B (32) an einer Gruppenkommunikation beteiligt sind und ein PoC-Client B ein priorisierter Benutzer ist, wobei die Vorrichtung (85) zum Vorabarteilen einer Sprecherlaubnis für den PoC-Client B ein Voraberteilen einer Sprecherlaubnis für den PoC-Client B nach jedem Gesprächsburst einschließt, ungeachtet dessen wer den vorherigen Gesprächsburst übertragen hat.

18. Gerät nach Anspruch 12, weiter mit:
einem Zeitgeber (84) zum Messen eines zulässigen Zeitraums nachdem einem PoC-Client B (32) eine Sprecherlaubnis voraberteilt worden ist; und
einer Vorrichtung zum Widerrufen der Sprecherlaubnis, falls der PoC-Client B keinen Gesprächsburst initiiert, bevor der Zeitgeber abläuft.

19. Gerät nach Anspruch 12, weiter mit:
einer Vorrichtung zum Empfangen einer Sprechanfrage von einem PoC-Client A (31), nach einem Voraberteilen einer Sprecherlaubnis für den PoC-Client B;
einer Vorrichtung (87) zum sofortigen Erteilen einer Sprecherlaubnis (54) für PoC-Client A; und
einer Vorrichtung zum Benachrichtigen eines PoC-Clients B, dass eine Sprecherlaubnis widerrufen worden ist, nach einem Erteilen einer Sprecherlaubnis für den PoC-Client A.

20. Gerät nach Anspruch 12, weiter mit:
einer Vorrichtung (86) zum Empfangen einer Sprechanfrage von einem PoC-Client A (31), nach einem Voraberteilen einer Sprecherlaubnis für den PoC-Client B (31);
einer Vorrichtung (86) zum sofortigen Benachrichtigen des PoC-Clients B, dass eine Sprecherlaubnis widerrufen worden ist;
einer Vorrichtung zum Empfangen einer Bestätigung von einem PoC-Client B; und
einer Vorrichtung zum Erteilen einer Sprecherlaubnis für den PoC-Client A, nach einem Empfangen der Bestätigung vom PoC-Client B.

21. Gerät nach Anspruch 12, wobei das Gerät in einem PoC-Server (33) implementiert ist, der die Kommunikation steuert.

## Revendications

1. Procédé permettant de fournir une Commande de Rafales Vocales rapide, TBC (Talk Burst Control), à un client de Messagerie Vocale Instantanée sur téléphone cellulaire, PoC (Push to Talk over Cellular), en communication PoC, dans lequel un Client PoC A (31) est en communication PoC avec un Client PoC B (32) par l'intermédiaire d'un serveur PoC (33), ledit procédé comprenant les étapes consistant à :
détecter (38) sur le serveur PoC la fin de la rafale vocale produite par le client PoC A,
**caractérisé par** le fait de :
faire en sorte que le serveur PoC (33) pré-octroie au client PoC B l'autorisation (41) de parler avant de recevoir une demande d'autorisation de parler du client PoC B, sans devoir envoyer une signalisation supplémentaire au serveur PoC, cela donnant au client PoC B (32) le droit de parler immédiatement après avoir appuyé sur le bouton-poussoir de conversation.

2. Procédé selon la revendication 1, dans lequel l'étape consistant à pré-octroyer au client PoC B (32) l'autorisation de parler consiste à envoyer un message de protocole TBC au client PoC B pré-octroyant au client PoC B le droit d'émettre des signaux multimédia sans qu'il soit nécessaire que le client PoC B envoie une signalisation supplémentaire à un serveur PoC (33).

3. Procédé selon la revendication 1, comprenant en outre, après la détection de la fin de la rafale vocale produite par le client PoC A (31), l'étape consistant à utiliser un modèle de configuration de communication pour prédire que le client PoC B (32) est l'interlocuteur suivant prévu.

4. Procédé selon la revendication 3, dans lequel le client PoC A (31) et le client PoC B (32) sont en communication de personne à personne et le modèle de configuration de communication prédit que des rafales vocales (37) alterneront entre le client PoC A et le client PoC B après chaque rafale vocale.

5. Procédé selon la revendication 3, dans lequel le client PoC A (31) et le client PoC B (32) sont en communication de groupe et le client PoC B possède le groupe, et dans lequel le procédé consiste à pré-octroyer au client PoC B l'autorisation de parler après chaque rafale vocale, indépendamment de celui qui a émis la rafale vocale précédente.

6. Procédé selon la revendication 1, dans lequel le client PoC A (31) et le client PoC B (32) sont en communication de groupe et le client PoC B est un utilisateur prioritaire, et dans lequel le procédé consiste à pré-octroyer (53, 54) au client PoC B l'autorisation de parler après chaque rafale vocale, indépendamment de celui qui a émis la rafale vocale précédente.

7. Procédé selon la revendication 1, comprenant en outre les étapes consistant à :
déclencher un temporisateur lorsqu'on pré-octroie au client PoC B (64) l'autorisation de parler ; et
abroger (73) l'autorisation de parler si le client PoC B ne déclenche pas de salve vocale avant que le temporisateur arrive à expiration (72).

8. Procédé selon la revendication 1, comprenant en outre, après avoir pré-octroyé au client PoC B 32 l'autorisation de parler, les étapes consistant à :
recevoir une demande de parler du client PoC A (31) ;
octroyer immédiatement au client PoC A l'autorisation (54) de parler ; et
notifier (55) au client PoC B que l'autorisation de parler a été abrogée après avoir octroyé au client PoC A l'autorisation de parler.

9. Procédé selon la revendication 1, comprenant en outre, après avoir pré-octroyé au client PoC B (32) l'autorisation de parler, les étapes consistant à :
recevoir une demande de parler du client PoC A (31) ;
notifier (58) au client PoC B que l'autorisation de parler a été abrogée ;
recevoir un accusé de réception (59) du client PoC B, et
octroyer (60) au client PoC A l'autorisation de parler après avoir reçu l'accusé de réception du client PoC B.

10. Procédé selon la revendication 1, comprenant en outre le fait que le client PoC B (32) indique à un utilisateur qu'on a pré-octroyé à l'utilisateur l'autorisation de parler.

11. Procédé selon la revendication 1, comprenant en outre le fait que le client PoC B (32) indique à un utilisateur que l'utilisateur a le droit de parler immédiatement après que l'utilisateur a appuyé sur un bouton-poussoir de conversation, PTT (Push to Talk).

12. Appareil permettant de fournir une Commande de Rafales Vocales rapide, TBC (Talk Burst Control), à un client de Messagerie Vocale Instantanée sur téléphone cellulaire, PoC, en communication PoC, dans lequel un client PoC A (31) est en communication PoC avec un client PoC B (32), ledit appareil comprenant :
un moyen (85) pour détecter l'achèvement d'une rafale vocale (37) produite par le client PoC A ;
**caractérisé par** :
un moyen (85) pour pré-octroyer au client PoC B une autorisation de parler avant de recevoir une demande de parler du client PoC B sans devoir envoyer une signalisation supplémentaire au serveur PoC, donnant au client PoC B (32) le droit de parler immédiatement après avoir appuyé sur le bouton-poussoir de conversation.

13. Appareil selon la revendication 12, dans lequel le moyen permettant de pré-octroyer au client PoC B (32) l'autorisation de parler comprend un moyen (86) pour envoyer un message de protocole TBC (89) au client PoC B, pré-octroyant au client PoC B le droit d'émettre des signaux multimédia sans qu'il soit nécessaire que le client PoC B envoie une signalisation supplémentaire à un serveur PoC.

14. Appareil selon la revendication 12, dans lequel le moyen (85) permettant de pré-octroyer au client POC B (32) l'autorisation de parler comprend un modèle de configuration de communication (86) qui prédit que le client PoC B est le prochain interlocuteur prédit.

15. Appareil selon la revendication 14, dans lequel le client PoC A (31) et le client PoC B (32) sont en communication de personne à personne et le modèle de configuration de communication prédit que des salves vocales (37) alterneront entre le client PoC A et le client PoC B après chaque rafale vocale.

16. Appareil selon la revendication 12, dans lequel le client PoC A (31) et le client PoC B (32) sont en communication de groupe et le client PoC B possède le groupe, dans lequel le moyen (85) permettant de pré-octroyer au client PoC B l'autorisation de parler comprend un moyen pour pré-octroyer au client PoC B l'autorisation de parler après chaque rafale vocale, indépendamment de celui qui a émis la rafale vocale.

17. Appareil selon la revendication 12, dans lequel le client PoC A (31) et le client PoC B (32) sont en communication de groupe et le client PoC B est un utilisateur prioritaire, dans lequel le moyen (85) permettant de pré-octroyer au client PoC B l'autorisation de parler consiste à pré-octroyer au client PoC B l'autorisation de parler après chaque rafale vocale, indépendamment de celui qui a émis la rafale vocale.

18. Appareil selon la revendication 12, comprenant en outre :
un temporisateur (84) pour mesurer une période de temps admise après avoir pré-octroyé au client PoC B (32) l'autorisation de parler ; et
un moyen pour abroger l'autorisation de parler si le client PoC B ne déclenche pas de rafale vocale avant que le temporisateur arrive à expiration.

19. Appareil selon la revendication 12, comprenant en outre :
un moyen pour recevoir une demande de parler du client PoC A (31) après avoir pré-octroyé au client PoC B (32) l'autorisation de parler ;
un moyen (87) pour octroyer immédiatement au client PoC A l'autorisation de parler ; et
un moyen pour notifier au client PoC B que l'autorisation de parler a été abrogée après avoir octroyé au client PoC A l'autorisation de parler.

20. Appareil selon la revendication 12, comprenant en outre :
un moyen (86) pour recevoir une demande de parler du client PoC A (31) après avoir pré-octroyé au client PoC B (31) l'autorisation de parler ;
un moyen (86) pour notifier immédiatement au client PoC B que l'autorisation de parler a été abrogée ;
un moyen pour recevoir un accusé de réception du client PoC B ; et
un moyen (87) pour octroyer au client PoC A l'autorisation de parler après avoir reçu un accusé de réception du client PoC B.

21. Appareil selon la revendication 12, dans lequel l'appareil est mis en oeuvre sur un serveur PoC (33) qui commande la communication.
